# EUROPEAN PATENT APPLICATION

(11) **EP 2 722 569 A1**
(43) Date of publication of application: **23.04.2014**
(21) Application number: 13189653.2
(22) Date of filing: 22.10.2013
(51) Int. Cl.: F16K 11/078

(54) **Single-control mixing cartridge for faucets**

(30) Priority: 22.10.2012 IT MI20121790
(71) Applicant: Cattaneo, Piero, 28010 Cavaglio d' Agogna (NO) (IT)
(72) Inventor: Cattaneo, Piero, 28010 Cavaglio d' Agogna (NO) (IT)
(74) Representative: Cicogna, Franco

(57) **Abstract**

A single-control mixing cartridge for faucets comprises a fixed bottom plate associated with a movable top plate; the fixed bottom plate comprising differently contoured asymmetrical hot water and cold water ports. The mixing cartridge provides a mixing rotary movement which is symmetrical on the hot water side and on the cold water side, but, at a central position thereof, delivers only cold water through partial openings. A main advantage of the inventive cartridge is that it provides the above functional features by a very simple and reliable cartridge construction.

## Description

### BACKGROUND OF THE INVENTION

The present invention relates to a single-control mixing cartridge, particularly for faucets.

As is known, in the faucet field mixing cartridges, either including or not including a ceramics disc, designed for single-control faucets, are well known.

The above mixing cartridges are conventionally designed for mixing hot water and cold water so as to gradually pass from a lower temperature to a higher temperature and vice-versa, both with a fully open operating condition and a partially open operating condition.

Such a gradual mixing is a very important feature, since it allows to adjust with a very high accuracy the mixed water temperature at will.

A further very important feature is the mixed water constant temperature, and this mainly in a shower faucet.

In such an application, it should be apparent that, at about 38°C, if the water temperature is a constant one with a variable water flow rate, then the user, attempting to either increase or decrease the shower water flow rate, does not have necessarily to search again the desired comfortable temperature.

However, it should be pointed out that a mixing faucet having such a construction causes sometimes a hot water waste since, by opening it for a short delivery time, and in a mixing position even if it is not necessary, then cold water is delivered but with the drawback of also sucking hot water in the delivery pipes.

This usual mode of operation, because of the normal central position of the control lever with respect to the faucet, causes an undesired waste of hot water.

In this connection it should be pointed out that the above mentioned central position of the control lever is that position thereat the lever is aligned on the faucet longitudinal middle line.

Because of the faucet certifying standard and a continuously increasing interest with respect to power consumption, the above faucet should be able of delivering cold water in its central position thereat the water is usually mixed to a low temperature condition, at least for a partial opening of the faucet, defined by the related standard as a so-called "hard point".

Since providing a mechanism having such an operating performance is not a simple task, a lot of faucet makers prefer to install a conventional mixing cartridge providing an asymmetric-rotary mixing with respect to the faucet middle line, and this by causing the full cold water position of the cartridge to coincide with the faucet middle line.

Thus, it is achieved that the water mixing rotary movement, which usually occurs through 100°, is all or nearly all leftward directed, that is to the hot water side.

On the other hand, such an approach, even if it is simple to be made, is not user-friendly in the practical use.

In fact a user, without an available side movement, is led to think that the faucet mechanism is locked or in a failure condition, and tends to force the movement to provide an unlocking action, which, sometimes, causes the operating mechanism to be broken.

To overcome the above drawback, some faucet makers add a short blind mixing stroke on the cold water side, thereby providing a small rotary movement, through 10° to 20°, to minimize the above undesired feeling drawback.

### SUMMARY OF THE INVENTION

Accordingly, the aim of the present invention is to provide such a single-control mixing cartridge for faucets overcoming the above mentioned drawbacks of the prior art cartridges.

Within the scope of the above mentioned aim, a main object of the invention is to provide such a faucet mixing cartridge with a normal mixing rotary movement, that is a symmetrical or nearly symmetrical rotary movement both on the hot water side and the cold water side and which, at a central position thereof, delivers only cold water at least for partial openings, as required by the current mixing faucet standards.

Another object of the present invention is to provide such a faucet mixing cartridge which does not require different machining operations or assembling positions, in comparison with a conventional mixing cartridge, and which may be easily and quickly installed in a faucet having standard holes, thereby allowing the faucet maker to achieve very high making and managing cost savings.

Yet another object of the present invention is to provide such a faucet mixing cartridge which, owing to its specifically constructional features, is very reliable and safe in operation.

According to one aspect of the present invention, the above mentioned aim and objects, as well as yet other objects, which will become more apparent hereinafter, are achieved by a single-control mixing cartridge for faucets, **characterized in that** said mixing cartridge comprises a fixed bottom plate associated with a movable top plate.

In this connection, it should be pointed out that in the present disclosure the top plate will be disclosed as performing a so-called "idle" movement, since, in addition to providing a softer operation, it allows an improved designing freedom, due to the reduced inner movements with respect to a direct movement, thereby providing a smaller size end product.

The bottom fixed plate comprises hot water and cold water ports having different asymmetrical shapes.

### BRIEF DESCRIPTION OF THE DRAWINGS

Further characteristics and advantages of the present invention will become more apparent hereinafter from the following disclosure of a preferred, though not exclusive, embodiment of the invention which is illustrated, by way of an indicative but not limitative example, in the accompanying drawings, where:
Figure 1 is a top plan view of a fixed bottom plate, according to the present invention, including hot water and cold water differently shaped ports;

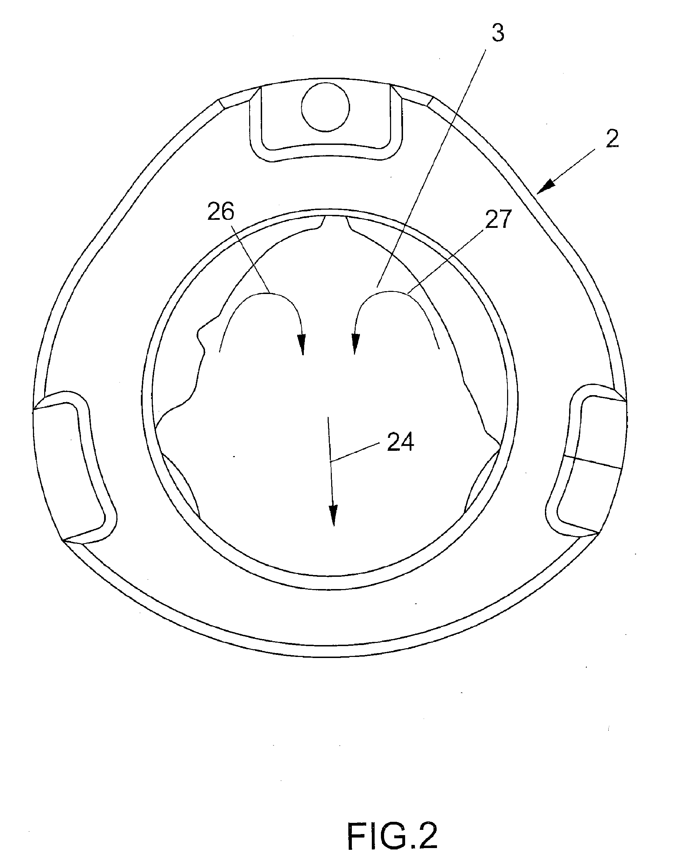

Figure 2 is a top plan view of a movable plate;
Figure 3 is another top plan view of a fixed bottom plate including a full splitting diaphragm;
Figure 4 is a further top plan view of a fixed bottom plate including a partial splitting diaphragm;
Figure 5 is a perspective view showing an assembling mode of the bottom plate; and
Figure 6 is a side cross-sectioned view of the inventive mixing cartridge.

### DESCRIPTION OF THE PREFERRED EMBODIMENTS

With reference to the number references of the above mentioned figures, the single-control mixing cartridge according to the present invention, comprises a fixed bottom plate 1, associated with a movable top plate 2.

According to the present invention, the fixed bottom plate 1 is provided with differently contoured asymmetrical ports 5, 4 for hot water and cold water, respectively.

The movable plate 2 comprises an asymmetrical port 3, including respective deflecting elements and small inlets with are auxiliary with respect to the main port.

The fixed bottom plate 1, as stated, comprises a cold water port 4 and a hot water port 5.

According to the present invention, said cold water port 4 is a cold water splitting port consisting of two partial cold water ports coupled by a separating diaphragm 6, 61.

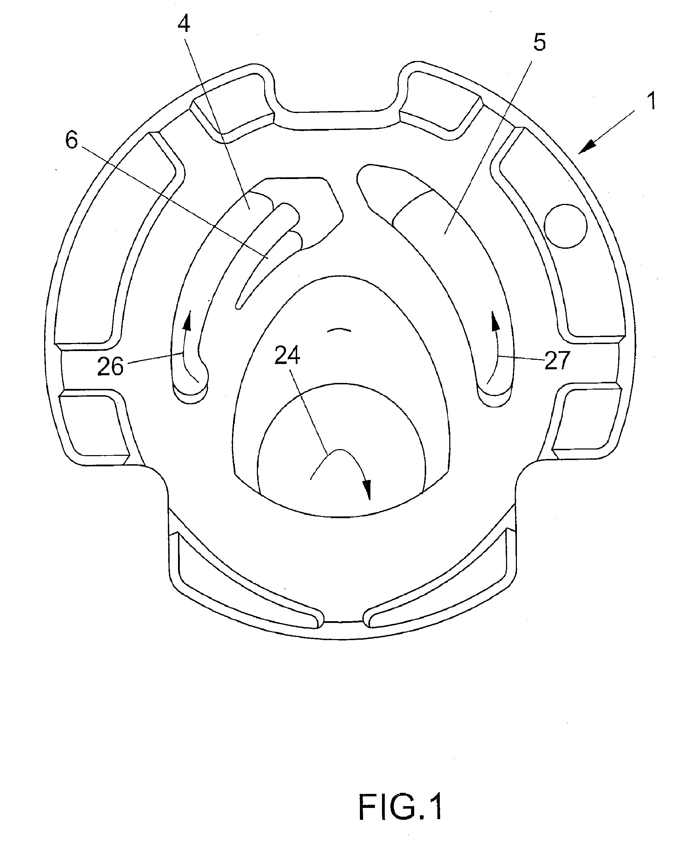

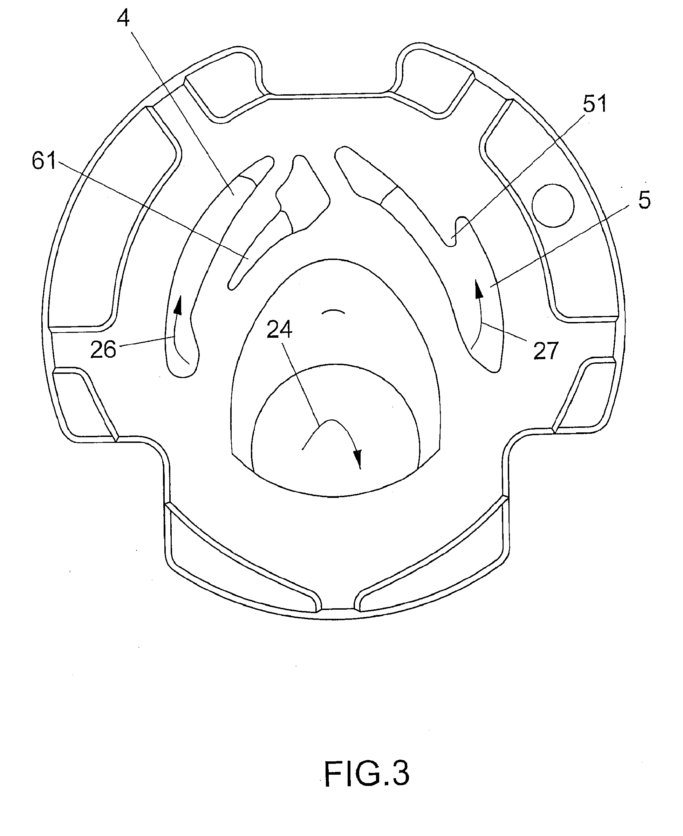

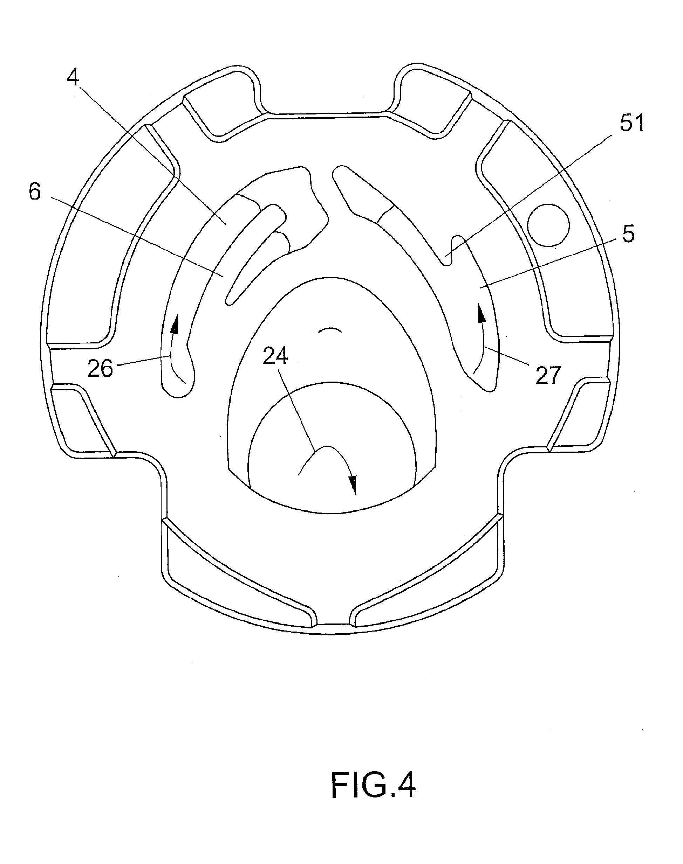

As is shown in Figures 1 and 4, said separating diaphragm 6 partially extends through the port 4 or, as is shown in Figure 3, said separating splitting diaphragm 61 covers the overall extension of the port 4.

In this connection it should be pointed out that the separating splitting diaphragms, either of partial shape 6 or full shape 61, are equivalent from a conceptual standpoint and achieve the same object, by only varying the hot and cold water amounts depending on requirements of the faucet arrangements.

Preferably, said hot water port 5 has a water port size smaller than that of the cold water port 4.

As is shown in figures 3 and 4, the hot water port 5 comprises a lug element 51, for flow rate adjusting purposes.

Advantageously, said movable top plate 2 comprises additional lug elements and flow switching elements.

The fixed bottom plate 1, with a cold water split port, according to the present invention, could also comprise a gasket seat for housing a sealing gasket therein, thereby meeting high pressure tightness sealing and water hammering performances.

It should be apparent that said plates 1 and 2, according to the above disclosed approaches, may be easily made with any desired diameter and thickness, according to designing requirements.

The plates according to the present invention can be mounted either in conventional mixing cartridges or in a cartridge comprising a specifically designed cartridge casing.

In conventional mixing cartridges, the casing can be laterally closed, or open to allow the movable plate movement.

In some said cartridges, the casing is an open casing to allow water to laterally exit said casing.

Such a side outlet allows the faucet to be designed with a very high freedom degree, however with a consequent shorter mixing cartridge useful life, since all the operating mechanism is immersed in water, with related quick wearing problems.

According to the present invention, it is preferred to provide a construction in which water circulates about the cartridge, without immersing the operating mechanism in the water.

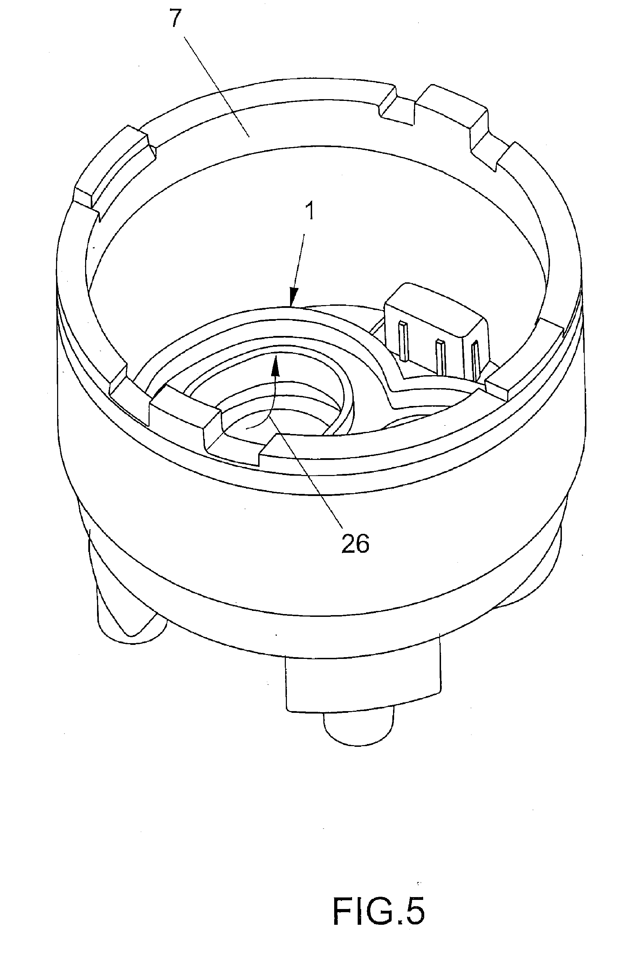

To provide an enlarged space for the movement of the movable plate, in particular, the casing 7 must have, as shown in Figure 5, an enlarged central inner diameter, that is larger than the top diameter thereof where are mounted the cartridge components.

Such an approach, which requires a more complex making process than that having a constant inner diameter, is however operatively safer than other solutions including a casing having an open bottom but also including further radially or axially extending sealing means to prevent water from entering the operating mechanism.

It should also be apparent that a mixing cartridge including the above disclosed mixing cartridge casing can be made either with a regular control rod embodiment, for conventionally delivering cold and hot water, or in a joystick rod embodiment.

A main advantage of a mixing cartridge including the above disclosed mixing cartridge casing is the outer size which is smaller that than of a conventional construction, thereby it is possible to make correspondingly reduced size faucets.

Thus, the cartridge according to the present invention, as stated, can be made in a regular rod embodiment, for conventionally delivering cold and hot water, in a cold water saving embodiment (C2 standard), in a hot water saving embodiment (C3 standard), or in a joystick rod embodiment.

In the Figures of the accompanying drawings, the reference number 26 shows the cold water inlet and the reference number 27 shows the hot water inlet.

The reference number 24 shows the outlet duct.

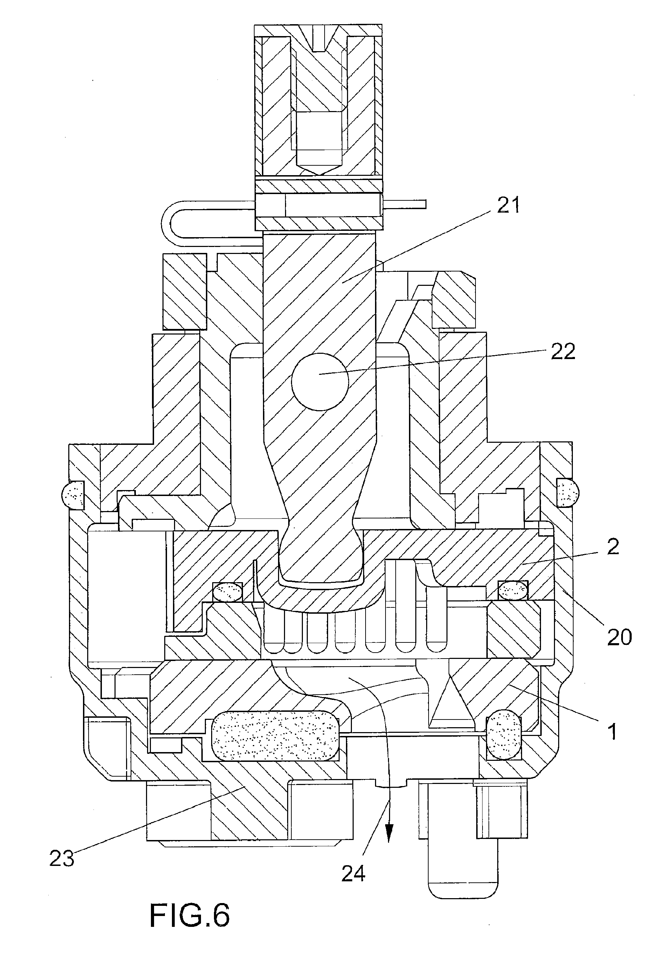

With reference to Figure 6, the reference number 21 shows the control lever of the mixing cartridge 20.

It is moreover herein shown a pivot pin 22 thereabout said control lever 21 swings.

Figure 6 also shows the mixing cartridge body 20, the water inlet duct 23 and the water outlet duct 24.

It has been found that the invention fully achieves the intended aim and objects.

In fact, the invention has provided a single-control mixing cartridge with a symmetrical type of rotary movement both on the hot water side and on the cold water side but which, on the other hand, at a central position thereof, will supply exclusively cold water for partial openings, as required by the current standards.

Another important feature of the cartridge according to the present invention is that it provides the above disclosed functional advantages by a very simple and reliable cartridge construction, differently from prior single-control mixing cartridges.

In practicing the invention, the used materials, as well as the contingent size and shapes can be any, according to requirements.

## Claims

1. A single-control mixing cartridge for faucets, **characterized in that** said cartridge comprises a fixed bottom plate associated with a movable top plate, said fixed bottom plate comprising differently contoured asymmetrical hot water and cold water ports.

2. A mixing cartridge, according to claim 1, **characterized in that** said cold water port is a cold water split port consisting of two partial cold water ports.

3. A mixing cartridge, according to claim 2, **characterized in that** said cold water port partial ports are coupled to one another at a plate tightness surface.

4. A mixing cartridge, according to claim 2, **characterized in that** said cold water port partial ports are not coupled to one another at said plate tightness surface.

5. A mixing cartridge, according to one or more of claims 2 to 4, **characterized in that** said cold water port is split by a splitting separating diaphragm.

6. A mixing cartridge, according to one or more of the preceding claims, **characterized in that** said hot water port has a hot water port size smaller than the cold water port size.

7. A mixing cartridge, according to one or more of the preceding claims, **characterized in that** said hot water port comprises a flow adjustment lug element.

8. A mixing cartridge, according to one or more of the preceding claims, **characterized in that** said movable top plate comprises additional lug elements and flow switching elements.

9. A mixing cartridge, according to one or more of the preceding claims, **characterized in that** said cartridge comprises a cartridge casing defining an inner space larger than an inlet thereof to allow said movable plate to properly move therein.

10. A mixing cartridge, according to one or more of the preceding claims, **characterized in that** said cartridge is made in a regular rod embodiment, for conventionally delivering cold and hot water, in a cold water saving embodiment (C2 standard), in a hot water saving embodiment (C3 standard), or in a joystick rod embodiment.
